**Europäisches Patentamt**

**European Patent Office**

**Office européen des brevets**

(19)

(11) **EP 1 445 847 A2**

(12) **EUROPÄISCHE PATENTANMELDUNG**

(43) Veröffentlichungstag:
**11.08.2004 Patentblatt 2004/33**

(51) Int Cl.⁷: **H02J 17/00**

(21) Anmeldenummer: **04000204.0**

(22) Anmeldetag: **08.01.2004**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK** | (72) Erfinder:<br>• **Scheible, Guntram, Dr.-Ing.**<br>**69493 Hirschberg (DE)**<br>• **Schutz, Jean, Dr.-Ing.**<br>**69115 Heidelberg (DE)** |
| (30) Priorität: **05.02.2003 DE 10304585** | (74) Vertreter: **Miller, Toivo et al**<br>**ABB Patent GmbH** |
| (71) Anmelder: **ABB RESEARCH LTD.**<br>**8050 Zürich (CH)** | **Postfach 1140**<br>**68520 Ladenburg (DE)** |

(54) **Zwei- oder mehrdimensionale Magnetfelderzeugungsanordnung**

(57) Es wird eine zwei- oder mehrdimensionale, kubusförmige Magnetfelderzeugungsanordnung vorgeschlagen, gebildet aus mindestens zwei orthogonal zueinander angeordneten Wicklungspaaren mit jeweils zwei sich parallel gegenüberstehenden Wicklungen (1, 2, 3, 4, 5, 6). Die Wicklungspaare sind jeweils überlappend angeordnet, so dass zwischen zwei parallelen Wicklungen jeweils ein vorgegebener Abstand (d2, d3) sowie jeweils ein vorgegebenes randseitiges Überlappungsmaß (d1) gebildet wird.

Fig. 1

EP 1 445 847 A2

**Beschreibung**

Die Erfindung bezieht sich auf eine zwei- oder mehrdimensionale Magnetfelderzeugungsanordnung gemäß dem Oberbegriff des Anspruchs 1.

Die Erfindung kann beispielsweise bei einem System mit einer Vielzahl drahtloser Sensoren und/oder Aktoren (drahtlos sowohl hinsichtlich Energieversorgung als auch hinsichtlich Kommunikation) verwendet werden, welches in einer Maschine oder Anlage, beispielsweise Industrieroboter, Herstellungsautomat oder Fertigungsautomat installiert ist. Als Sensoren bzw. Aktoren können Näherungsschalter/Näherungssensoren, Temperaturmesssensoren, Druckmesssensoren, Strommesssensoren oder Spannungsmesssensoren bzw. mikromechanische, piezoelektrische, elektrochemische, magnetostriktive, elektrostatische oder elektromagnetische Aktoren verwendet werden.

In der DE 199 26 799 A1 wird ein System für eine eine Vielzahl von drahtlosen Näherungssensoren aufweisende Maschine, insbesondere Fertigungsautomat, vorgeschlagen, wobei

- jeder Näherungssensor mindestens eine zur Energieaufnahme aus einem mittelfrequenten Magnetfeld geeignete Sekundärwicklung aufweist,
- wobei mindestens eine von einem mittelfrequenten Oszillator gespeiste, ein Magnetfeld erzeugende Primärwicklung zur drahtlosen Versorgung der Näherungssensoren mit elektrischer Energie vorgesehen ist,
- und wobei jeder Näherungssensor mit einer Sendeeinrichtung ausgestattet ist, welche interessierende Sensor-Informationen beinhaltende Funksignale an eine zentrale, mit einem Prozessrechner der Maschine verbundene Basisstation abgibt.

Die erforderliche Primärwicklung umfasst eine relativ große Fläche und besteht vielfach nur aus wenigen Windungen, gegebenenfalls aus einer einzigen Windung. Bei diesem drahtlosen System entfällt im Vergleich zu konventionellen Lösungen mit Draht/Kabelanschluss zur elektrischen Energieversorgung und zur Kommunikation der durch Planung, Material, Installation, Dokumentation und Wartung bedingte relativ hohe Kostenfaktor der Draht/Kabelanschlüsse. Es können keine Ausfälle aufgrund von Kabelbrüchen oder schlechten, beispielsweise korrodierten Kontakten auftreten.

In der DE 199 26 562 A1 werden ein Verfahren und eine Anordnung zur drahtlosen Versorgung einer Vielzahl Aktoren mit elektrischer Energie, ein Aktor und eine Primärwicklung hierzu sowie ein System für eine eine Vielzahl von Aktoren aufweisende Maschine vorgeschlagen, wobei die vorgeschlagene Technologie bezüglich Energieversorgung und Kommunikation gleichartig der vorstehend für die DE 199 26 799 A1 angegebenen Technologie ist.

In der DE 102 09 656 A1 werden ein Magnetfelderzeugungssystem und eine Anordnung zur drahtlosen Versorgung einer Vielzahl Sensoren und/oder Aktoren mit einem Magnetfeldversorgungssystem vorgeschlagen. Das Magnetfelderzeugungssystem besitzt eine zweidimensionalen Wicklungsanordnung mit zwei orthogonal zueinander angeordneten, eine Maschine oder Anlage umschließenden Wicklungen, deren Wicklungsachsen senkrecht aufeinander stehen und die über zwei Einspeiseschaltungen mit Wechselgrößen versorgt werden. Zur Erzeugung eines zweidimensionalen, rotierenden Magnetfeldes weisen die beiden Wechselgrößen gleiche Frequenz, ähnliche Stromamplituden und ähnliche Spannungsamplituden auf und sind miteinander synchronisiert. Es wird eine Phasenverschiebung von vorzugsweise 90° zwischen der Wechselgröße der ersten Einspeiseschaltung und der Wechselgröße der zweiten Einspeiseschaltung eingestellt.

Des weiteren werden alternative Ausführungsformen zur Erzeugung eines dreidimensionalen Magnetfeldes sowie eine Anordnung zur drahtlosen Versorgung einer Vielzahl Sensoren und/oder Aktoren mit einem Magnetfelderzeugungssystem vorgeschlagen.

Der Erfindung liegt die Aufgabe zugrunde, eine für unterschiedliche Raumgrößen kostengünstig erstellbare, zwei- oder mehrdimensionale Magnetfelderzeugungsanordnung der eingangs genannten Art anzugeben, welche eine möglichst gleichmäßige Magnetfelderzeugung sicherstellt.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass zweidimensionale oder dreidimensionale Magnetfelder gewünschter Größe in Räumen unterschiedlicher Größe unter Verwendung standardisierter Wicklungen und standardisierter Wicklungsanordnungen produziert werden können. Bei allen Ausführungsformen der zwei- oder mehrdimensionalen Magnetfelderzeugungsanordnung wird unter Verwendung einer möglichst kleinen Anzahl Wicklungen (Primärwicklungen) eine relativ gleichmäßige Feldverteilung des produzierten Magnetfeldes im von den Wicklungen umschlossenen Raum erzielt, wobei die minimale Feldstärke 70 % der im Zentrum auftretenden Feldstärke an keiner Stelle dieses Raumes unterschreitet.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:

Fig. 1 und 4    eine Grundanordnung einer kubusförmigen, zweidimensionalen Magnetfelderzeugungsanordnung,

Fig. 2 und 5      eine vergrößerte, quaderförmige Magnetfelderzeugungsanordnung,

Fig. 3 und 6      eine vergrößerte, kubusförmige Magnetfelderzeugungsanordnung.

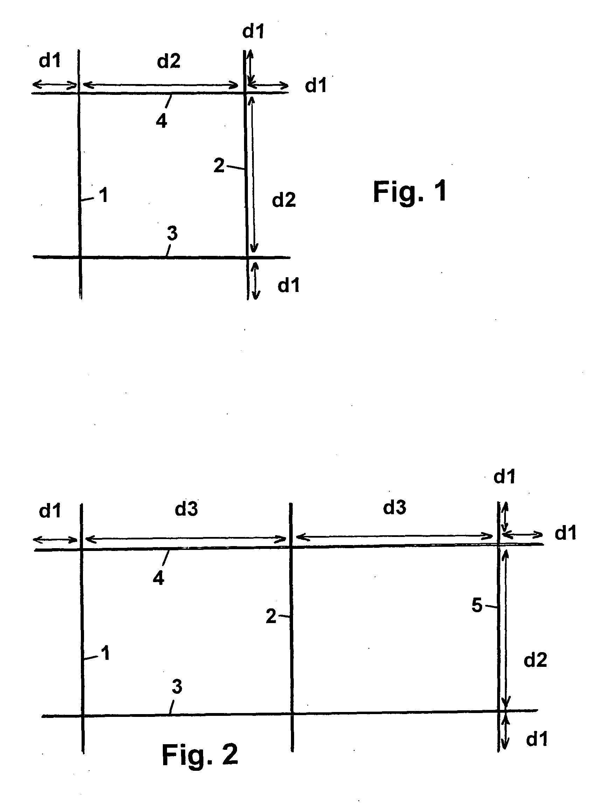

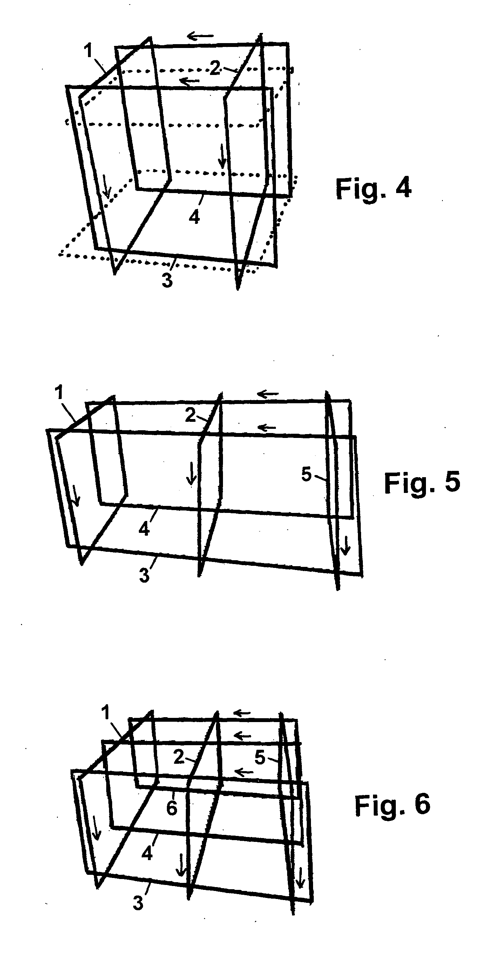

In Fig. 1 ist eine Grundanordnung einer zweidimensionalen Magnetfelderzeugungsanordnung dargestellt. Zur Erzeugung eines zweidimensionalen Magnetfeldes wird gemäß den Figuren 1, 4 eine kubusförmige Anordnung vorgeschlagen, bestehend aus zwei orthogonal zueinander angeordneten Wicklungspaaren mit jeweils zwei sich parallel gegenüberstehenden Wicklungen, d. h. mit einem ersten Wicklungspaar mit erster Wicklung 1 und parallel hierzu angeordneter zweiter Wicklung 2 sowie einem zweiten Wicklungspaar mit dritter Wicklung 3 und parallel hierzu angeordneter vierter Wicklung 4. Fig. 4 zeigt die entsprechende dreidimensionale Anordnung der Wicklungen 1, 2 sowie 3, 4 hierzu. Im Raum zwischen den Wicklungspaaren ist eine Maschine oder Anlage mit einer Vielzahl von Sensoren und/oder Aktoren angeordnet, welche Baukomponenten aufweisen, welche elektrische Energie aus dem Magnetfeld zwischen den Wicklungspaaren beziehen. In Fig. 4 ist des weiteren beispielhaft gepunktet ein weiteres Wicklungspaar angedeutet, wodurch aus der zweidimensionalen eine dreidimensionale Magnetfelderzeugungsanordnung zur Erzeugung eines dreidimensionalen Magnetfeldes geschaffen wird.

Alle Wicklungen 1, 2, 3, 4 sind gleichartig bezüglich ihrer Abmessungen, was eine Kostenreduktion ermöglicht (Baukastensystem, Erhöhung der Stückzahl gleichartiger Wicklungen). Ferner sind die Wicklungen jeweils mit Resonanzkondensatoren zu Resonanzkreisen verschaltet, welche durch (im Resonanzfall betriebene und dadurch) mit minimaler Leistung dimensionierbare Einspeiseschaltungen versorgt werden. Die von den Einspeiseschaltungen gebildeten Wechselgrößen weisen gleiche Frequenz und in der Regel ähnliche- vorzugsweise gleiche - Strom- und Spannungsamplituden auf und sind miteinander synchronisiert, wobei eine Phasenverschiebung von 90° zwischen den Wechselgrößen für die Wicklungen 1, 2 einerseits und für die Wicklungen 3, 4 andererseits eingestellt wird. In Fig. 4 sind die Richtungen der in den Wicklungen 1, 2, 3, 4 fließenden Ströme jeweils durch Pfeile gekennzeichnet.

Die beiden Wicklungspaare 1 + 2 sowie 3 + 4 sind dabei überlappend angeordnet, so dass zwischen den Wicklungen 1 und 2 sowie zwischen den Wicklungen 3 und 4 jeweils ein Abstand d2 sowie jeweils ein randseitiges Überlappungsmaß d1 gebildet wird. Die Gesamtlänge, Gesamtbreite sowie Gesamttiefe der kubusförmigen Wicklungsanordnung beträgt jeweils D = d2 + 2d1, wobei vorzugsweise d1 = 1/6 D und d2 = 4/6 D beträgt. Die Überlappung trägt entscheidend dazu bei, dass die minimale Feldstärke 70 % der im Zentrum auftretenden (Maximal-)Feldstärke an keiner Stelle dieses Raumes - insbesondere auch nicht in den Randbereichen - unterschreitet (bei maximalem felderfülltem Volumen).

Fig. 2 zeigt eine im Vergleich zu Fig. 1 vergrößerte, quaderförmige Anordnung mit zwei parallelen Wicklungen 3, 4 einerseits und - orthogonal hierzu - drei parallelen Wicklungen 1, 2, 5 andererseits. Fig. 5 zeigt die entsprechende dreidimensionale Anordnung der Wicklungen 1, 2, 5 sowie 3, 4 hierzu. Die Wicklungen 1, 2, 5 einerseits bzw. 3, 4 andererseits sind jeweils gleichartig bezüglich ihrer Abmessungen und sind mit Resonanzkondensatoren jeweils zur Resonanzkreisen verschaltet, welche durch Einspeiseschaltungen versorgt werden. Die von den Einspeiseschaltungen gebildeten Wechselgrößen weisen gleiche Frequenz und in der Regel ähnliche - vorzugsweise gleiche - Strom- und Spannungsamplituden auf und sind miteinander synchronisiert, wobei eine Phasenverschiebung von 90° zwischen den Wechselgrößen für die Wicklungen 1, 2, 5 einerseits und für die Wicklungen 3, 4 andererseits eingestellt wird. In Fig. 5 sind die Richtungen der in den Wicklungen 1, 2, 5, 3, 4 fließenden Ströme jeweils durch Pfeile gekennzeichnet. Im Raum zwischen den Wicklungen ist wiederum eine Maschine oder Anlage mit einer Vielzahl von Sensoren und/oder Aktoren angeordnet, welche Baukomponenten aufweisen, welche elektrische Energie aus dem Magnetfeld zwischen den Wicklungen beziehen.

Die beiden Wicklungsanordnungen 1 + 2 + 5 sowie 3 + 4 sind dabei überlappend angeordnet, so dass zwischen den Wicklungen 1 und 2 sowie zwischen den Wicklungen 2 und 5 jeweils ein Abstand d3, zwischen den Wicklungen 3 und 4 ein Abstand d2 sowie jeweils ein randseitiges Überlappungsmaß d1 gebildet wird. Die Gesamtlänge der kubusförmigen Wicklungsanordnung beträgt 2D = 2d3 + 2d1, wobei vorzugsweise d1 = 1/6 D und d3 = 5/6 D. Gesamtbreite sowie Gesamttiefe der kubusförmigen Wicklungsanordnung betragen jeweils D = d2 + 2d1, wobei vorzugsweise d2 = 4/6 D.

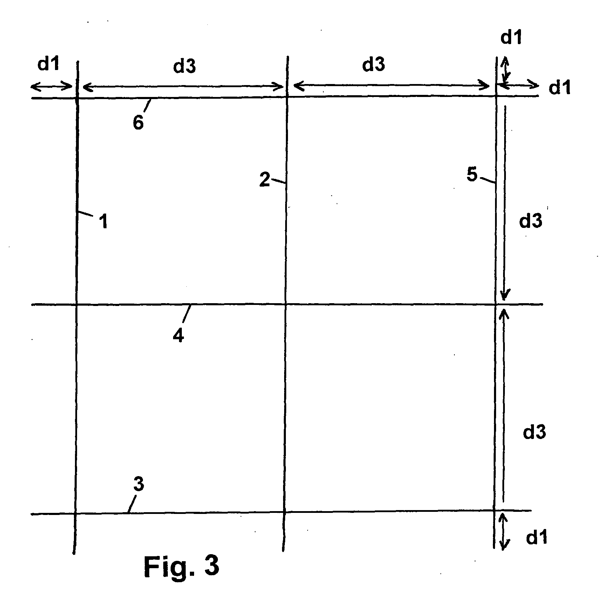

Fig. 3 zeigt eine im Vergleich zu den Figuren 1 und 2 vergrößerte, kubusförmige Anordnung mit drei parallelen Wicklungen 3, 4, 6 einerseits und drei parallelen Wicklungen 1, 2, 5 andererseits. Fig. 6 zeigt die entsprechende dreidimensionale Anordnung der Wicklungen 1, 2, 5 und 3, 4, 6 hierzu. Alle Wicklungen 1, 2, 3, 4, 5, 6 sind gleichartig bezüglich ihrer Abmessungen und sind mit Resonanzkondensatoren jeweils zur Resonanzkreisen verschaltet, welche durch Einspeiseschaltungen versorgt werden. Die von den Einspeiseschaltungen gebildeten Wechselgrößen weisen gleiche Frequenz und in der Regel ähnliche - vorzugsweise gleiche - Strom- und Spannungsamplituden auf und sind miteinander synchronisiert, wobei eine Phasenverschiebung von 90° zwischen den Wechselgrößen für die Wicklungen 1, 2, 5 einerseits und für die Wicklungen 3, 4, 6 andererseits eingestellt wird. In Fig. 6 sind die Richtungen der in den Wicklungen 1, 2, 5, 3, 4, 6 fließenden Ströme jeweils durch Pfeile gekennzeichnet. Im Raum zwischen den Wicklungen ist wiederum eine Maschine oder Anlage mit einer Vielzahl von Sensoren und/oder Aktoren angeordnet, welche Baukomponenten aufweisen, welche elektrische Energie aus dem Magnetfeld zwischen den Wicklungen beziehen.

Die beiden Wicklungsanordnungen 1 + 2 + 5 sowie 3 + 4 + 6 sind dabei überlappend angeordnet, so dass zwischen den Wicklungen 1 und 2, zwischen den Wicklungen 2 und 5, zwischen den Wicklungen 3 und 4 und zwischen den Wicklungen 4 und 6 jeweils ein Abstand d3 sowie jeweils ein randseitiges Überlappungsmaß d1 gebildet wird. Die Gesamtlänge, Gesamtbreite sowie Gesamttiefe der kubusförmigen Wicklungsanordnung beträgt 2D = 2d3 + 2d1, wobei vorzugsweise d1 = 1/6 D und d3 = 5/6 D.

**Bezugszeichenliste**

1 erste Wicklung
2 zweite Wicklung
3 dritte Wicklung
4 vierte Wicklung
5 fünfte Wicklung
6 sechste Wicklung

d1 Überlappungsmaß
d2 Abstand zwischen zwei parallelen Wicklungen
d3 Abstand zwischen zwei parallelen Wicklungen

**Patentansprüche**

1. Zwei- oder mehrdimensionale, kubusförmige oder quaderförmige Magnetfelderzeugungsanordnung, gebildet aus mindestens zwei orthogonal zueinander angeordneten Wicklungskonfigurationen mit jeweils mindestens zwei sich parallel gegenüberstehenden Wicklungen (1, 2, 3, 4, 5, 6), **dadurch gekennzeichnet, dass** sich die orthogonal zueinander gerichteten Wicklungen jeweils in ihren Randbereichen überlappen, dass zwischen zwei parallelen Wicklungen jeweils ein vorgegebener Abstand (d2, d3) gebildet wird und dass sich jeweils ein vorgegebenes randseitiges Überlappungsmaß (d1) zwischen zwei orthogonalen Wicklungen einstellt.

2. Magnetfelderzeugungsanordnung nach Anspruch 1, **gekennzeichnet durch** eine aus zwei Wicklungspaaren (1 + 2, 3 + 4) mit) gebildete kubusförmige Wicklungsanordnung mit D als Gesamtlänge, Gesamtbreite sowie Gesamthöhe, wobei alle Wicklungen bezüglich ihrer Abmessungen gleichartig sind und wobei gilt

$$D = d2 + 2d1$$

mit

- randseitigem Überlappungsmaß d1 und
- Abstand zwischen zwei Wicklungen eines Wicklungspaares d2.

3. Magnetfelderzeugungsanordnung nach Anspruch 2, **dadurch gekennzeichnet, dass** gilt:

- randseitiges Überlappungsmaß d1 =1/6 D und
- Abstand zwischen zwei Wicklungen eines Wicklungspaares d2 = 4/6 D.

4. Magnetfelderzeugungsanordnung nach Anspruch 1, **gekennzeichnet durch** eine aus einem Wicklungspaar (3 + 4) einerseits und - orthogonal hierzu - drei parallelen Wicklungen (1 + 2 + 5) andererseits gebildete quaderförmige Wicklungsanordnung mit 2D als Gesamtlänge und D als Gesamtbreite sowie Gesamthöhe, wobei alle Wicklungen bezüglich ihrer Abmessungen gleichartig sind und wobei gilt

$$2D = 2d3 + 2d1$$

und

$$D = d2 + 2d1$$

mit

- randseitigem Überlappungsmaß d1,
- Abstand zwischen den Wicklungen des Wicklungspaares d2 und
- Abstand zwischen zwei Wicklungen der drei parallelen Wicklungen d3.

5. Magnetfelderzeugungsanordnung nach Anspruch 4, **dadurch gekennzeichnet, dass** gilt:

- randseitiges Überlappungsmaß d1 =1/6 D,
- Abstand zwischen den Wicklungen des Wicklungspaares d2 = 4/6 D und
- Abstand zwischen zwei Wicklungen der drei parallelen Wicklungen d3 = 5/6 D.

6. Magnetfelderzeugungsanordnung nach Anspruch 1, **gekennzeichnet durch** eine aus drei parallelen Wicklungen (3 + 4 + 6) einerseits und - orthogonal hierzu - drei weiteren parallelen Wicklungen (1 + 2 + 5) andererseits gebildete quaderförmige Wicklungsanordnung mit 2D als Gesamtlänge, Gesamtbreite sowie Gesamthöhe, wobei alle Wicklungen bezüglich ihrer Abmessungen gleichartig sind und

wobei gilt

$$2D = 2d3 + 2d1$$

mit

- randseitigem Überlappungsmaß d1 und
- Abstand zwischen zwei Wicklungen der drei parallelen Wicklungen d3.

7. Magnetfelderzeugungsanordnung nach Anspruch 6, **dadurch gekennzeichnet, dass** gilt:

- randseitiges Überlappungsmaß d1 =1/6 D und
- Abstand zwischen zwei Wicklungen der drei parallelen Wicklungen d3 = 5/6 D.

Fig. 1

Fig. 2

Fig. 3

Fig. 4

Fig. 5

Fig. 6